(19) Europäisches Patentamt
European Patent Office
Office européen des brevets

(11) **EP 2 756 582 B1**

(12) **EUROPÄISCHE PATENTSCHRIFT**

(45) Veröffentlichungstag und Bekanntmachung des Hinweises auf die Patenterteilung:
**18.11.2015 Patentblatt 2015/47**

(51) Int Cl.:
*H02K 5/18* *(2006.01)*   *H02K 9/08* *(2006.01)*
*H02K 9/14* *(2006.01)*

(21) Anmeldenummer: **12769988.2**

(22) Anmeldetag: **12.09.2012**

(86) Internationale Anmeldenummer:
**PCT/EP2012/067775**

(87) Internationale Veröffentlichungsnummer:
**WO 2013/037797 (21.03.2013 Gazette 2013/12)**

(54) **ROTIERENDE ELEKTRISCHE MASCHINE**

ROTATING ELECTRICAL MACHINE

MACHINE ÉLECTRIQUE TOURNANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.09.2011 DE 102011053611**

(43) Veröffentlichungstag der Anmeldung:
**23.07.2014 Patentblatt 2014/30**

(73) Patentinhaber: **ebm-papst Mulfingen GmbH & Co. KG**
**74673 Mulfingen (DE)**

(72) Erfinder:
• **STILLGER, Reinhard**
  **76413 Öhringen (DE)**
• **PFAFF, Christian**
  **74653 Künzelsau (DE)**
• **KROTSCH, Jens**
  **97996 Niederstetten (DE)**
• **BAUN, Martin**
  **74673 Mulfingen (DE)**
• **BAER, Martin**
  **74673 Mulfingen (DE)**
• **EHMANN, Tobias**
  **74632 Neuenstein (DE)**
• **HEINZE, Mark**
  **74585 Rot am See (DE)**
• **GERNER, Reinhold**
  **74747 Ravenstein (DE)**
• **HAMMEL, Christian**
  **74629 Pfedelbach-Oberohrn (DE)**

(74) Vertreter: **Patentanwälte**
**Dr. Solf & Zapf**
**Candidplatz 15**
**81543 München (DE)**

(56) Entgegenhaltungen:
**EP-A1- 1 100 182      EP-A1- 1 768 234**
**GB-A- 2 283 371      JP-A- 2006 025 521**
**US-A1- 2004 150 270**

## Beschreibung

Die vorliegende Erfindung betrifft gemäß dem Oberbegriff des Anspruchs 1 eine rotierende elektrische Maschine, mit einem in einem Gehäuse angeordneten Stator und einem über eine Welle um eine Rotationsachse drehbar gelagerten Rotor, wobei das Gehäuse eine Umfangswandung und zwei axial gegenüberliegende, als Lagerflansche mit Drehlagern für die Welle ausgebildete Stirnwandungen aufweist, und wobei mit der Welle zwei Kühllüfterräder verbunden sind, und zwar einerseits innerhalb des Gehäuses ein inneres, bei Rotation innerhalb des Gehäuses einen inneren Kühlluftkreislauf erzeugendes Kühllüfterrad und andererseits außerhalb des Gehäuses ein äußeres, bei Rotation eine das Gehäuse überströmende äußere Kühlluftströmung erzeugendes Kühllüfterrad, wobei die auf der Seite des äußeren Kühllüfterrades angeordnete erste Stirnwandung auf ihrer dem äußeren Kühllüfterrad zugewandten Außenseite eine äußere Kühlrippengeometrie sowie auf ihrer gegenüberliegenden Innenseite eine innere Kühlrippengeometrie aufweist, wobei das äußere Kühllüfterrad als Radialrad mit radialen Schaufeln ausgebildet ist, wobei auf die erste Stirnwandung - deren Kühlrippengeometrie und das Kühllüfterrad überdeckend - eine kappenartige Haube aufgesetzt ist, die in einer zur Rotationsachse senkrechten Kappenwand eine zentrische Lufteinlassöffnung aufweist und mit einem von der Kappenwand ausgehenden, axialen Umfangsrand die erste Stirnwandung umfangsgemäß umgreift, wobei das äußere Kühllüfterrad in Verbindung mit der Haube derart ausgebildet ist, dass bei Rotation durch die Lufteinlassöffnung der Haube axial angesaugte Luft die äußere Kühlrippengeometrie radial nach außen durchströmt und im radial äußeren Bereich über die Haube in eine axiale Richtung umgelenkt wird und die Gehäuse-Umfangswandung außen überströmt.

Es wird ausdrücklich bemerkt, dass der Begriff "rotierende elektrische Maschine" sowohl eine Ausführung als Generator als auch eine Ausführung als Motor umfasst.

Das Dokument EP 1 768 234 A1 beschreibt eine elektrische Maschine, wobei es sich konkret um einen Motor in einer vollständig gekapselten und Lüfter-gekühlten Ausführung handelt. Bei dieser bekannten Ausführung ist das innere Kühllüfterrad auf der dem äußeren Kühllüfterrad zugewandten Seite des Stators und des Rotors angeordnet, so dass die beiden Kühllüfterräder über die eine, erste Stirnwandung des Gehäuses voneinander getrennt sind.

Einen recht ähnlichen Stand der Technik, und zwar einen geschlossenen, luftgekühlten elektrischen Motor, beschreibt auch das Dokument EP 0 387 743 B1 bzw. die korrespondierende Veröffentlichung DE 690 04 834 T2. Hierbei ist allerdings das innere Kühllüfterrad auf der anderen, von dem äußeren Kühllüfterrad entfernt liegenden Seite des Rotors und des Stators angeordnet.

Die EP 1 100 182 A1 offenbart einen mittels eines Lüfterrades gekühlten elektrischen Motor, der ein Gehäuse mit einer Mantelwandung mit ersten und zweiten Enden aufweist. Das Gehäuse weist außerdem eine erste und zweite Trennwandung auf, die am jeweiligen Ende der Mantelwandung angeordnet sind und jeweils Lager aufnehmen. Um die Wärmeabfuhr zu verbessern, weist eine Innenfläche des Gehäuses zudem mehrere Stifte und eine Außenfläche des Gehäuses mehrere Rippen auf. Der Motor weist zudem einen in dem Gehäuse gelagerten Stator und einen innerhalb des Stators gelagerten Rotor auf. Ein erstes, radiales Lüfterrad ist an einer Außenseite der ersten Trennwandung angeordnet und erzeugt einen über die Rippen strömenden Luftstrom. Ein zweites Lüfterrad ist an einer Innenseite der ersten Trennwandung angeordnet und erzeugt einen über ein internes Leitblech und über die inneren Stifte strömenden Luftstrom. Der Motor der EP 1 100 182 A1 weist außerdem ein Lüfterrad-Abdeckung für das erste, äußere Lüfterrad auf, welche in einer zur Rotationsachse senkrechten Kappenwand eine Lufteinlassöffnung aufweist. Die Lüfterrad-Abdeckung und die erste Trennwand leiten den Luftstrom über das Gehäuse, so dass er über die Rippen und die erste Trennwand radial nach außen strömt, umgelenkt wird und in axialer Richtung außen über das Gehäuse strömt.

Die US 2004/0150270 A1 offenbart einen vollständig umschlossenen elektrischen Motor, welcher ein inneres Lüfterrad aufweist, welches zur besseren Wärmeableitung aus Aluminium besteht. Zudem kann auch eine an das Lüfterrad angrenzende Verbindungswandung aus Aluminium bestehen.

Die GB 2 283 371 A offenbart einen Motor mit einem Lüfterrad und einem Motorkörper, der an einem Gehäuse befestigt ist. Das Gehäuse weist Stifte zur Wärmeabfuhr auf, welche unterhalb des Lüfterrades und um das Lüfterrad herum angeordnet sind.

Der vorliegenden Erfindung liegt die Aufgabe zu Grunde, die Kühlung und dazu insbesondere die Wärmeabführung an der ersten Stirnwand aus dem Inneren des Gehäuses nach außen weiter zu verbessern.

Erfindungsgemäß wird dies durch die Merkmale des unabhängigen Anspruchs 1 erreicht. Vorteilhafte Ausgestaltungsmerkmale der Erfindung sind in den abhängigen Ansprüchen und in der anschließenden Beschreibung enthalten.

Erfindungsgemäß ist demnach vorgesehen, dass die auf der Seite des äußeren Kühllüfterrades zwischen diesem und dem inneren Kühlluftkreislauf angeordnete erste Stirnwandung des Gehäuses mit einer hohen Wärmeleitfähigkeit von mindestens $100 \; \frac{W}{m \cdot K}$ ausgebildet ist und auf ihrer dem äußeren Kühllüfterrad zugewandten Außenseite eine äußere Kühlrippengeometrie sowie auf ihrer gegenüberliegenden Innenseite eine innere Kühlrippengeometrie aufweist, wobei die äußere Kühlrippengeometrie der ersten Stirnwandung in einem radial inneren, von dem äußeren Kühllüfterrad bei Rotation überdeckten Bereich der ersten Stirnwandung von stiftartigen, axial bis in die Nähe des Kühllüfterrades vorstehenden Kühlansätzen sowie in einem sich radial nach außen an den Rotationsbereich des äußeren Kühllüfterrades anschließenden Bereich der ersten Stirnwandung von stiftartigen, axial zu der Haube hin vorstehenden Kühlansätzen und in einem radial äußeren Bereich der ersten Stirnwandung von flügelartigen axial und radial ausgerichteten Rippenansätzen gebildet ist, die im inneren Übergangsbereich zwischen der Kappenwand und dem Umfangsrand der Haube liegen.

Durch diese vorteilhafte Ausgestaltung wird die Wärmeübertragung zwischen dem inneren Kühlluftkreislauf und der äußeren Kühlluftströmung deutlich verbessert. Die innerhalb des Gehäuses in Strömung versetzte Luft nimmt die innere Wärme auf und gibt diese effektiv über die innere Kühlrippengeometrie an die erste Stirnwandung ab. Durch die hohe Wärmeleitfähigkeit gibt die Stirnwandung die Wärme über die äußere Kühlrippengeometrie effektiv nach außen an die Kühlluftströmung weiter, so dass die Wärme sehr effektiv an die Umgebung abgegeben wird.

Der Begriff "gut wärmeleitend" bedeutet im Sinne der Erfindung eine Wärmeleitfähigkeit λ von mindestens 100 $\frac{W}{m \cdot K}$, insbesondere aber mindestens 150 $\frac{W}{m \cdot K}$. In bevorzugter Ausgestaltung besteht zumindest die erste, die beidseitigen Kühlrippengeometrien aufweisende Stirnwandung aus Aluminium, insbesondere Aluminium-Druckguss, wobei der Begriff "Aluminium" auch eine AluminiumLegierung umfasst, so dass die Wärmeleitfähigkeit - je nach Legierung - im Bereich von 150 bis 240 $\frac{W}{m \cdot K}$ liegt.

In weiterer vorteilhafter Ausgestaltung besteht auch die Umfangswandung des Gehäuses aus einem entsprechenden, gut wärmeleitenden Material, insbesondere Aluminium. Zudem kann mit Vorteil auch die gegenüberliegende zweite Stirnwandung aus Aluminium bestehen, so dass auch in diesem Bereich eine effektive Wärmeübertragung über eine mit der zweiten Stirnwandung verbundene, metallische Maschinenhalterung erreicht wird.

Anhand eines bevorzugten, in der Zeichnung veranschaulichten Ausführungsbeispiels soll die Erfindung im Folgenden genauer erläutert werden. Es zeigen:

Fig. 1 eine Perspektivansicht einer erfindungsgemäßen elektrischen Maschine,

Fig. 2 einen Axialschnitt der Maschine in einer in Fig. 1 durch eine Schnittlinie II-II veranschaulichten diametralen Schnittebene,

Fig. 3 eine entsprechend Fig. 2 diametral geschnittene Perspektivansicht der erfindungsgemäßen Maschine,

Fig. 4 eine Perspektivansicht analog zu Fig. 1, jedoch ohne eine kappenartige Haube im Bereich des äußeren Kühllüfterrades und der äußeren Kühlrippengeometrie,

Fig. 5 eine Perspektivansicht der Maschine ohne die erste Stirnwandung zur Einsicht in den Bereich des Stators und des Rotors sowie ohne das innere Kühllüfterrad,

Fig. 6 eine gesonderte perspektivische Darstellung des Rotors auf die Seite des inneren Kühllüfterrades und

Fig. 7 eine gesonderte Perspektivansicht des Rotors auf die andere, dem inneren Kühllüfterrad gegenüberliegende Seite.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf das konkrete Ausführungsbeispiel beschränkt ist.

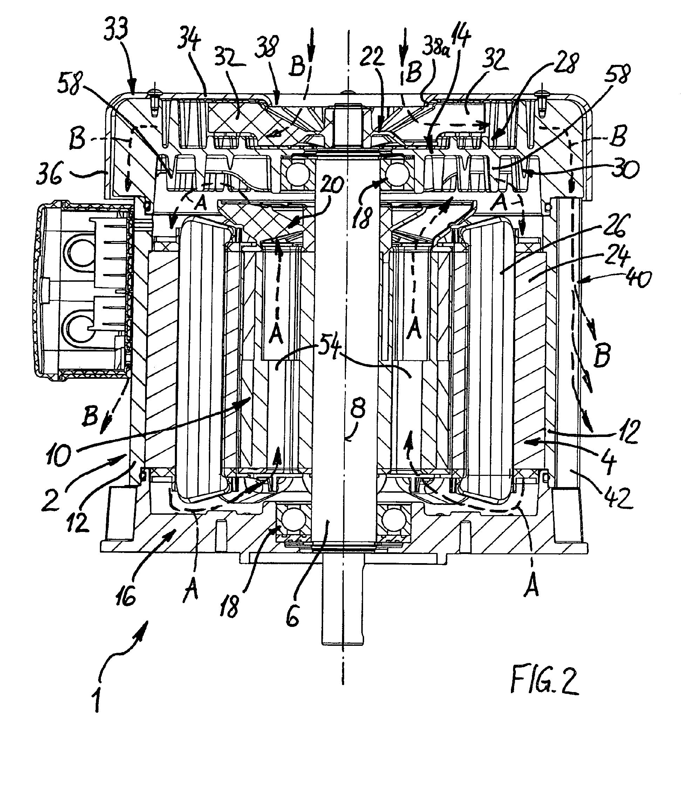

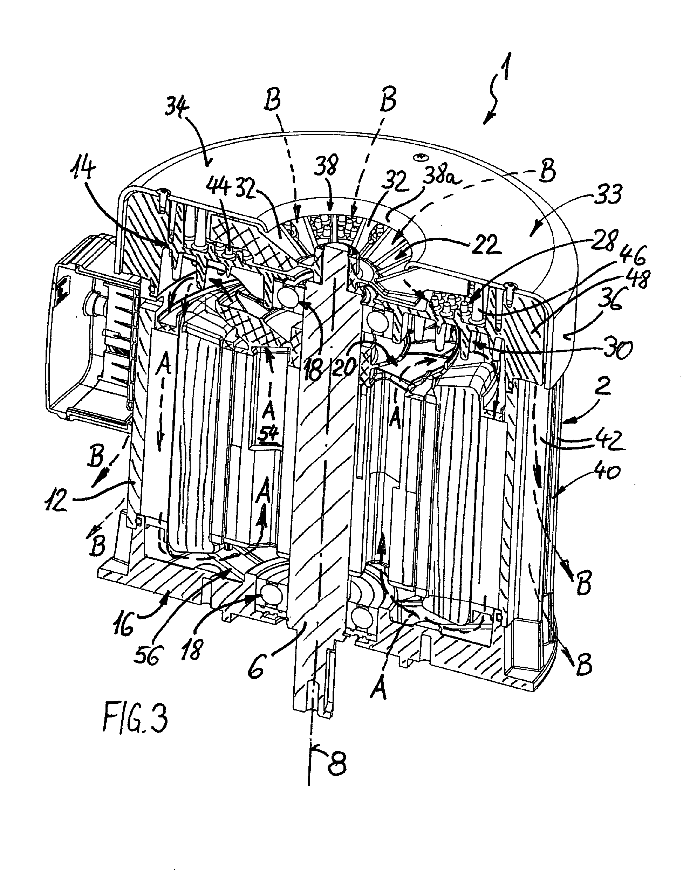

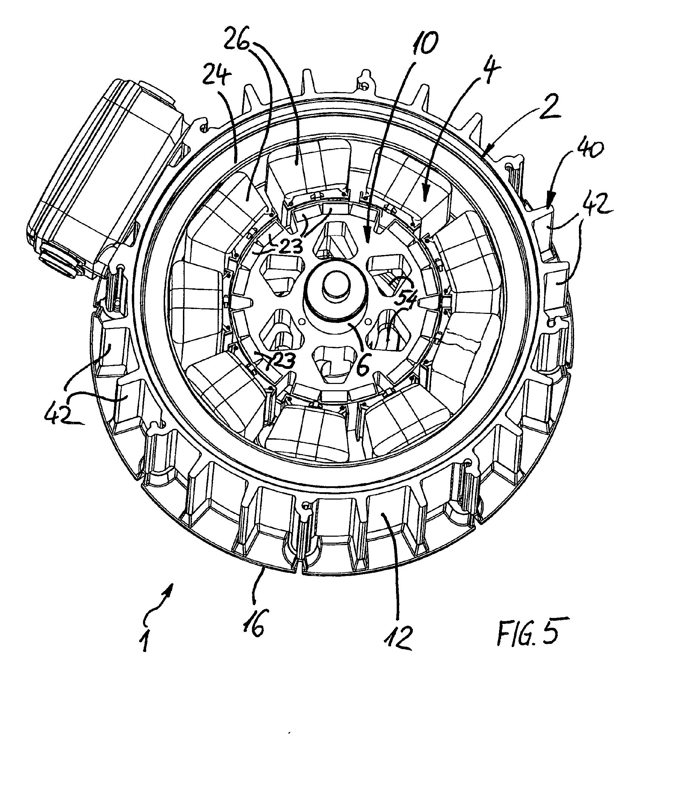

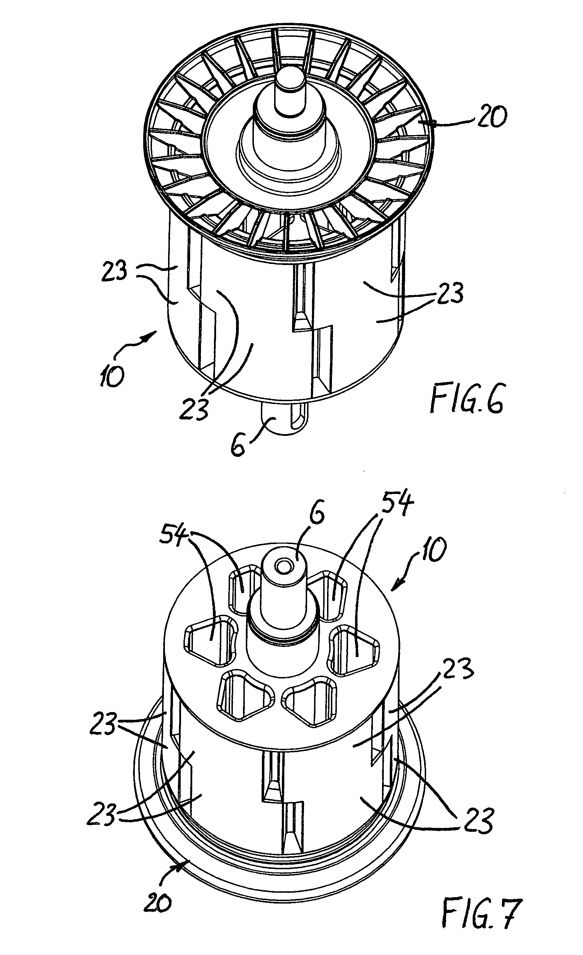

Eine erfindungsgemäße rotierende elektrische Maschine 1 - in einer Ausführung als Generator oder Motor - weist einen in einem geschlossenen Gehäuse 2 angeordneten Stator 4 und einen über eine Welle 6 um eine Rotationsachse 8 drehbar gelagerten Rotor 10 auf. Zu diesen inneren Bestandteilen der Maschine 1 wird insbesondere auf Fig. 2 und 3 sowie auch auf Fig. 5 verwiesen. Zudem ist der Rotor 10 mit der Welle 6 gesondert in Fig. 6 und 7 dargestellt.

Durch das geschlossene Gehäuse 2 ist die Maschine 1 vollständig gekapselt, so dass sie einer hohen IP-Schutzklasse, insbesondere IP 54, entspricht.

Das Gehäuse 2 besteht aus einer den Rotor 10 und den Stator 4 koaxial umschließenden Umfangswandung 12 und zwei axial gegenüberliegenden Stirnwandungen 14 und 16. Diese Stirnwandungen 14, 16 sind als Lagerflansche mit Drehlagern 18 für die Welle 6 ausgebildet. Im dargestellten Beispiel handelt es sich bei den Drehlagern 18 um Kugellager, die die Welle 6 umschließen und jeweils in einer Aufnahme der jeweiligen Stirnwandung 14, 16 sitzen.

Zur Eigenkühlung der elektrischen Maschine 1 sind mit der Welle 6 zwei Kühllüfterräder 20 und 22 verbunden, und zwar einerseits innerhalb des Gehäuses 2 ein inneres Kühllüfterrad 20 und andererseits außerhalb des Gehäuses 2 ein äußeres Kühllüfterrad 22. Bei Rotation des Rotors 10 werden folglich beide Kühllüfterräder 20, 22 mit rotierend angetrieben. Das innere Kühllüfterrad 20 erzeugt bei Rotation innerhalb des Gehäuses 2 einen inneren Kühlluftkreislauf, der in Fig. 2 und 3 durch gestrichelte Pfeile A veranschaulicht ist. Das äußere Kühllüfterrad 22 erzeugt bei Rotation eine das Gehäuse 2 überströmende äußere Kühlluftströmung, die in Fig. 2 und 3 mit gestrichelten Pfeilen B angedeutet ist.

In der dargestellten Ausführungsform ist die elektrische Maschine 1 als Innenläufer-Maschine ausgebildet, wobei der Rotor 10 als Innenläufer von dem Stator 4 umschlossen ist und innerhalb des Stators 4 rotiert. Der Rotor 10 weist Permanentmagnete 23 auf (s. insbesondere Fig. 5). Der Stator 4 besteht aus einem als Blechpaket ausgeführten Statorkern 24 und Statorwicklungen 26.

Erfindungsgemäß ist nun vorgesehen, dass die auf der Seite des äußeren Kühllüfterrades 22 zwischen diesem und dem inneren Kühlluftkreislauf A angeordnete erste Stirnwandung 14 des Gehäuses 2 mit einer hohen Wärmeleitfähigkeit von mindestens $100 \ \frac{W}{m \cdot K}$ ausgebildet ist und auf ihrer dem äußeren Kühllüfterrad 22 zugewandten Außenseite eine äußere Kühlrippengeometrie 28 sowie auf ihrer gegenüberliegenden Innenseite eine innere Kühlrippengeometrie 30 aufweist. Somit ist erfindungsgemäß die erste Stirnwandung 14 als Kühlkörper ausgebildet, der sehr effektiv Wärme aus dem inneren Kühlluftkreislauf A aufnimmt, nach außen führt und dort an die äußere Kühlluftströmung B abgibt.

Um die gute Wärmeleitfähigkeit zu erreichen, besteht die erste Stirnwandung 14 bevorzugt aus Aluminium, und zwar insbesondere als einstückiges Aluminium-Druckgussteil. Der allgemeine Begriff "Aluminium" schließt auch AluminiumLegierungen ein. Reines, nahezu 100 %-iges Aluminium weist bekanntlich eine Wärmeleitfähigkeit im Bereich von $\lambda_{Al} = 236 \ \frac{W}{m \cdot K}$ auf, und im Falle einer Aluminium-Legierung liegt die Wärmeleitfähigkeit im Bereich von 150 bis $240 \ \frac{W}{m \cdot K}$.

In bevorzugter Ausgestaltung besteht auch die Umfangswandung 12 und weiter bevorzugt auch die zweite Stirnwandung 16 aus Aluminium. Im Bereich der zweiten Stirnwandung 16 kann hierdurch eine zusätzliche effektive Wärmeübertragung über eine mit der zweiten Stirnwandung 16 verbundene, metallische Maschinenhalterung (nicht dargestellt) erreicht werden.

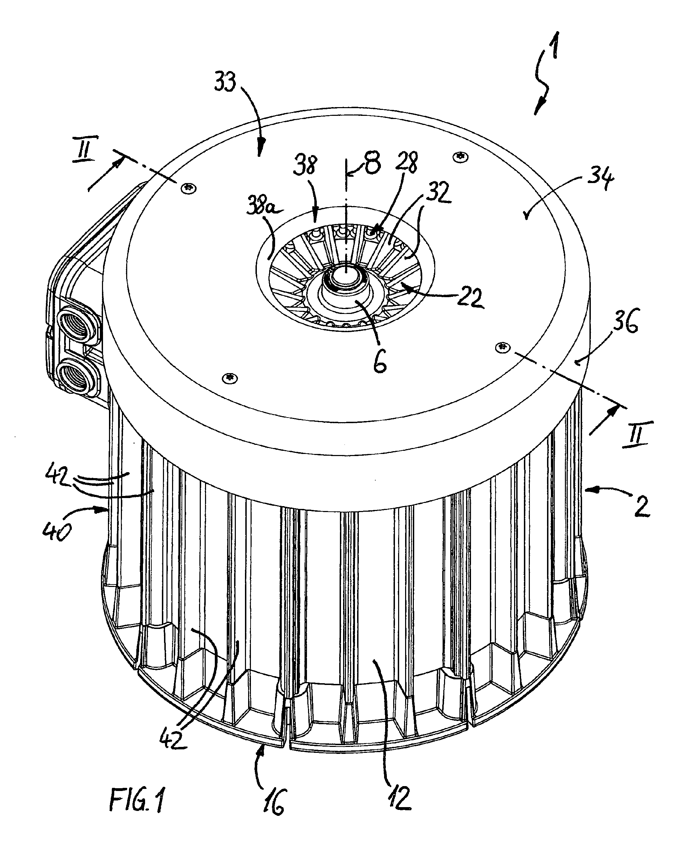

Das äußere Kühllüfterrad 22 ist als Radialrad mit radialen Schaufeln 32 ausgebildet, wobei die Schaufeln 32 mit ihren Schaufelflächen in radial und axial ausgerichteten Ebenen liegen. Gemäß Fig. 1 bis 3 ist hierbei auf die erste Stirnwandung 14 - deren Kühlrippengeometrie 28 und das Kühllüfterrad 22 überdeckend - eine kappenartige Haube 33 aufgesetzt, die aus einer zur Rotationsachse 8 senkrechten Kappenwand 34 und einem von dieser Kappenwand 34 ausgehenden, axialen Umfangsrand 36 besteht, der die erste Stirnwandung 14 umfangsgemäß in axialer Richtung übergreift. Die stirnseitige, zur Rotationsachse 8 senkrechte Kappenwand 34 weist eine zentrische Lufteinlassöffnung 38 auf. Diese Lufteinlassöffnung 38 kann einen sich düsenartig zu dem äußeren Kühllüfterrad 22 hin erstreckenden Öffnungsrand 38a aufweisen.

Erfindungsgemäß ist das äußere Kühllüfterrad 22 in Verbindung mit der Haube 33 und der äußeren Kühlrippengeometrie 28 der ersten Gehäuse-Stirnwandung 14 derart ausgebildet, dass bei Rotation durch die Lufteinlassöffnung 38 der Haube 33 Umgebungsluft von außen axial angesaugt wird, diese Luft die Kühlrippengeometrie 28 radial nach außen durchströmt und im radial äußeren Bereich über die Haube 33 in eine axiale Richtung umgelenkt wird, schließlich die Gehäuse-Umfangswandung 12 außen überströmt und so wieder ins Freie gelangt. Hierdurch wird Wärme nach außen abgeführt.

Hierbei ist es vorteilhaft, wenn die Umfangswandung 12 des Gehäuses 2 außenseitig ebenfalls eine Kühlrippengeometrie 40 aufweist, die bevorzugt - zumindest überwiegend - aus länglichen, radial vorstehenden und axial verlaufenden Kühlrippen 42 besteht.

Was nun die äußere Kühlrippengeometrie 28 der ersten Stirnwandung 14 betrifft, so ist diese erfindungsgemäß in einem radial inneren, von dem äußeren Kühllüfterrad 22 bei Rotation überdeckten Bereich der ersten Stirnwandung 14 von stiftartigen Kühlansätzen 44 gebildet, die axial bis in die Nähe der von den zugewandten Kanten der Schaufeln 32 definierten Rotationsebene des Kühllüfterrades 22 vorstehen. Es handelt sich um eine Vielzahl von Kühlansätzen 44, die in einem ringförmigen Flächenbereich der Stirnwandung 14 verteilt angeordnet sind.

Weiterhin ist die äußere Kühlrippengeometrie 28 erfindungsgemäß in einem sich radial nach außen an den Rotationsbereich des äußeren Kühllüfterrades 22 anschließenden, ringförmigen Flächenbereich der ersten Stirnwandung 14 von ebenfalls stiftartigen, allerdings axial weiter zu der Kappenwand 34 der Haube 33 hin vorstehenden und somit längeren Kühlansätzen 46 gebildet. Auch diese Kühlansätze 46 sind mit einer großen Anzahl über den ringförmigen Flächenbereich verteilt angeordnet.

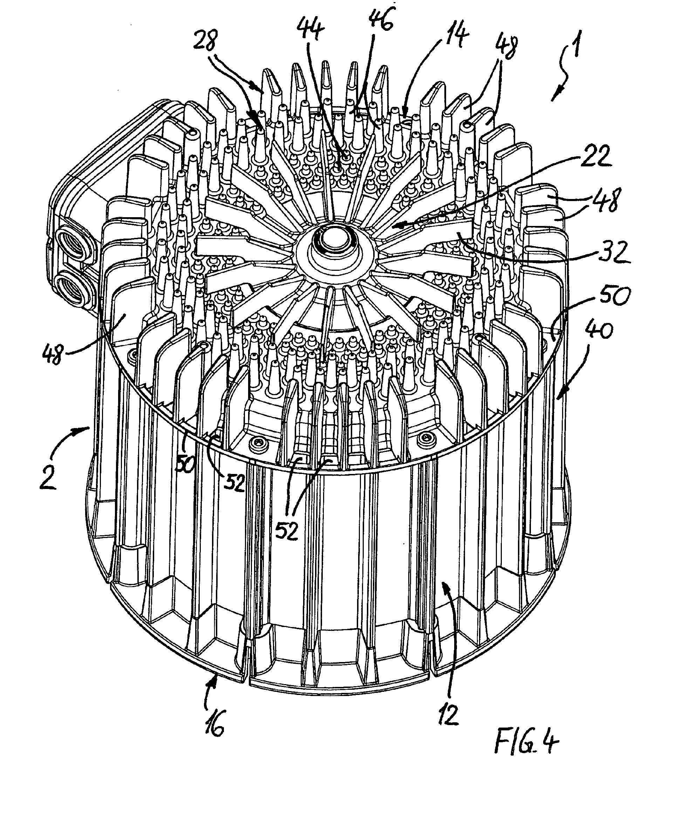

Schließlich ist die äußere Kühlrippengeometrie 28 erfindungsgemäß in einem radial äußeren, ringförmigen Flächenbereich der ersten Stirnwandung 14 von einer Vielzahl von flügelartigen, axial und radial ausgerichteten Rippenansätzen 48 gebildet. Im aufgesetzten Zustand der Haube 33 - siehe insbesondere Fig. 2 und 3 - liegen die Rippenansätze 48 im inneren Übergangsbereich zwischen der Kappenwand 34 und dem Umfangsrand 36 der Haube 33. Die etwa radial von innen nach außen strömende Luft der äußeren Kühlluftströmung B strömt radial zwischen den Rippenansätzen 48 hindurch, wodurch ein Drall der Strömung beseitigt wird, und die Haube 33 lenkt die Luftströmung von der radialen Richtung in eine axiale Richtung um. Indem die erste Stirnwandung 14 in einem äußeren, die angrenzende Umfangswandung 12 radial überragenden Randbereich 50 jeweils zwischen den flügelartigen Rippenansätzen 48 Luftöffnungen 52 (siehe Fig. 4) aufweist, kann die Kühlluft in axialer bzw. achsparalleler Richtung weiter über die Umfangswandung 12 hinweg strömen.

Die erfindungsgemäße Ausgestaltung der äußeren Kühlrippengeometrie 28 gestattet eine von der Drehrichtung des Rotors 10 unabhängige Durchströmung vom radial inneren Bereich nach außen, wobei die flügelartigen Rippenansätze 48 zur Luftführung und im Zusammenwirken mit der Haube 33 zur Luftumlenkung dienen sowie auch zur Beseitigung eines aus der Rotation resultierenden Dralls der Luftströmung B. Auch diese Wirkung der Rippenansätze 48 ist durch deren radiale Ausrichtung von der Drehrichtung unabhängig.

Was nun das innere Kühllüfterrad 20 betrifft, so kann dieses ebenfalls als Radialrad ausgebildet sein. In der bevorzugten Ausführung handelt es sich aber um ein Diagonalrad. Das innere Kühllüfterrad 20 bewirkt bei Rotation, dass der innere Kühlluftkreislauf A durch axiale Kühlkanäle 54 des Rotors 10, über die innere Kühlrippengeometrie 30 der ersten Stirnwandung 14, durch insbesondere zwischen dem Statorkern 24 und den Statorwicklungen 26 gebildete Spalte des Stators 4 sowie bevorzugt über eine zusätzliche Kühlrippengeometrie 56 auf der Innenseite der zweiten Stirnwandung 16 verläuft, siehe dazu insbesondere Fig. 3. Die Kühlrippengeometrie 56 der zweiten Stirnwandung 16 kann aus beliebigen Kühlansätzen bestehen, die auch mechanisch als Versteifungsrippen wirken können. Die innere Kühlrippengeometrie 30 der ersten Stirnwandung 14 ist zumindest teilweise von stiftartigen, axial vorstehenden Kühlansätzen 58 gebildet, wodurch ebenfalls eine Unabhängigkeit von der Drehrichtung erreicht wird.

Alle Kühlansätze 44, 46, 48, 58 der bzw. jeder Stirnwandung 14, 16 sind mit einem sich derart in axialer Richtung zu ihrem freien Ende hin verjüngenden Querschnitt ausgebildet, dass eine Herstellung der jeweiligen Stirnwandung 14, 16 als einstückiges Formteil, insbesondere als Metall-Druckgussteil, mit einfacher axialer Entformung möglich ist. Die stiftartigen Kühlansätze 44, 46, 58 weisen bezüglich ihres Querschnitts ein Verhältnis ihrer radial gemessenen Querschnittslänge I zur dazu senkrechten Querschnittsbreite b auf, welches bevorzugt im Bereich zwischen 0,8 und 1,5 liegt, d.h. I : b = 0,8 bis 1,5. Vorzugsweise kann es sich um einen kreisförmigen oder polygonalen Querschnitt mit dem Verhältnis I : b ≈ 1 handeln. Die flügelartigen Rippenansätze 48 weisen dagegen ein Querschnittsverhältnis I : b auf, welches im Bereich zwischen 1,5 und 6,0 liegt.

Abschließend sei noch bemerkt, dass in der bevorzugten Ausführung der elektrischen Maschine 1 das innere Kühllüfterrad 20 auf der der ersten Stirnwandung 14 zugewandten Seite des Rotors 10 angeordnet ist. Grundsätzlich kann es aber auch auf der anderen, der Stirnwandung 16 zugewandten Seite des Rotors 10 liegen.

Wie sich noch aus Fig. 6 und 7 ergibt, besteht der Rotor 10 aus zwei axial aneinander angrenzenden Abschnitten, die mit den Permanentmagneten 23 gegeneinander in Umfangsrichtung um einen Winkel von bis zu 20° verdreht sind. Die Kühlkanäle 54 sind axial durchgehend im radial inneren, magnetisch nicht wirksamen Bereich des Rotors 10 angeordnet.

**Patentansprüche**

1. Rotierende elektrische Maschine (1), mit einem in einem Gehäuse (2) angeordneten Stator (4) und einem über eine Welle (6) um eine Rotationsachse (8) drehbar gelagerten Rotor (10), wobei das Gehäuse (2) eine Umfangswandung (12) und zwei axial gegenüberliegende, als Lagerflansche mit Drehlagern (18) für die Welle (6) ausgebildete Stirnwandungen (14, 16) aufweist, und wobei mit der Welle (6) zwei Kühllüfterräder (20, 22) verbunden sind, und zwar einerseits innerhalb des Gehäuses (2) ein inneres, bei Rotation innerhalb des Gehäuses (2) einen inneren Kühlluftkreislauf (A) erzeugendes Kühllüfterrad (20) und andererseits außerhalb des Gehäuses (2) ein äußeres, bei Rotation eine das Gehäuse (2) überströmende äußere Kühlluftströmung (B) erzeugendes Kühllüfterrad (22), wobei die auf der Seite des äußeren Kühllüfterrades (22) angeordnete erste Stirnwandung (14) auf ihrer dem äußeren Kühllüfterrad (22) zugewandten Außenseite eine äußere Kühlrippengeometrie (28) sowie auf ihrer gegenüberliegenden Innenseite eine innere Kühlrippengeometrie (30) aufweist, wobei das äußere Kühllüfterrad (22) als Radialrad mit radialen Schaufeln (32) ausgebildet ist, wobei auf die erste Stirnwandung (14) - deren Kühlrippengeometrie (28) und das Kühllüfterrad (22) überdeckend - eine kappenartige Haube (33) aufgesetzt ist, die in einer zur Rotationsachse (8) senkrechten Kappenwand (34) eine zentrische Lufteinlassöffnung (38) aufweist und mit einem von der Kappenwand (34) ausgehenden, axialen Umfangsrand (36) die erste Stirnwandung (14) umfangsgemäß umgreift, wobei das äußere Kühllüfterrad (22) in Verbindung mit der Haube (33) derart ausgebildet ist, dass bei Rotation durch die Lufteinlassöffnung (38) der Haube (33) axial angesaugte Luft die äußere Kühlrippengeometrie (28) radial nach außen durchströmt und im radial äußeren Bereich über die Haube (33) in eine axiale Richtung umgelenkt wird und die Gehäuse-Umfangswandung (12) außen überströmt,

   **dadurch gekennzeichnet, dass** die erste Stirnwandung (14) mit einer hohen Wärmeleitfähigkeit von mindestens $100 \frac{W}{m \cdot K}$ ausgebildet ist und die äußere Kühlrippengeometrie (28) der ersten Stirnwandung (14) in einem radial inneren, von dem äußeren Kühllüfterrad (22) bei Rotation überdeckten Bereich der ersten Stirnwandung (14) von stiftartigen, axial bis in die Nähe des Kühllüfterrades (22) vorstehenden Kühlansätzen (44) sowie in einem sich radial nach außen an den Rotationsbereich des äußeren Kühllüfterrades (22) anschließenden Bereich der ersten Stirnwandung (14) von stiftartigen, axial zu der Haube (33) hin vorstehenden Kühlansätzen (46) und in einem radial äußeren Bereich der ersten Stirnwandung (14) von flügelartigen axial und radial ausgerichteten Rippenansätzen gebildet ist, die im inneren Übergangsbereich zwischen der Kappenwand (34) und dem Umfangsrand (36) der Haube (33) liegen.

2. Elektrische Maschine nach Anspruch 1, **dadurch gekennzeichnet, dass** zumindest die erste Stirnwandung (14) des Gehäuses (2), vorzugsweise auch zumindest die Umfangswandung (12), aus einem gut wärmeleitenden Material, insbesondere Aluminium, besteht.

3. Elektrische Maschine nach Anspruch 1 oder 2, **dadurch gekennzeichnet, dass** die Umfangswandung (12) des Gehäuses (2) außenseitig eine Kühlrippengeometrie (40) aufweist, die bevorzugt zumindest überwiegend aus länglichen, radial vorstehenden und axial verlaufenden Kühlrippen (42) besteht.

4. Elektrische Maschine nach einem der Ansprüche 1 bis 3, **dadurch gekennzeichnet, dass** die erste Stirnwandung (14) in einem äußeren, die angrenzende Umfangswandung (12) radial überragenden Randbereich (50) Luftöffnungen (52) für die äußere Kühlluftströmung (B) aufweist.

5. Elektrische Maschine nach einem der Ansprüche 1 bis 4, **dadurch gekennzeichnet, dass** das innere Kühllüfterrad (20) als Radial- oder Diagonalrad derart ausgebildet ist, dass der innere Kühlluftkreislauf (A) durch axiale Kühlkanäle (54) des Rotors (10), über die innere Kühlrippengeometrie (30) der ersten Stirnwandung (14), durch insbesondere zwischen einem Statorkern (24) und Statorwicklungen (26) gebildete Spalte des Stators (4) und bevorzugt über eine zusätzliche Kühlrippengeometrie (56) auf der Innenseite der zweiten Stirnwandung (16) verläuft.

6. Elektrische Maschine nach einem der Ansprüche 1 bis 5, **dadurch gekennzeichnet, dass** die innere Kühlrippengeometrie (30) der ersten Stirnwandung (14) zumindest teilweise von stiftartigen, axial vorstehenden Kühlansätzen (58) gebildet ist.

7. Elektrische Maschine nach einem der Ansprüche 1 bis 6, **dadurch gekennzeichnet, dass** das innere Kühllüfterrad (20) auf der der ersten Stirnwandung (14) zugewandten Seite des Rotors (10) angeordnet ist.

8. Elektrische Maschine nach Anspruch 1 oder 6, **dadurch gekennzeichnet, dass** die Kühlansätze (44, 46, 48, 58) der/jeder Stirnwandung (14, 16) mit einem sich zu ihrem freien Ende hin verjüngenden Querschnitt ausgebildet sind, so dass eine Herstellung der Stirnwandung (14; 16) als Formteil, insbesondere als Metall-Druckgussteil, mit einfacher axialer Entformung möglich ist.

9. Elektrische Maschine nach Anspruch 8, **dadurch gekennzeichnet, dass** die stiftartigen Kühlansätze (44, 46, 58) bezüglich ihres Querschnitts ein Längen-Breitenverhältnis (I: b) im Bereich zwischen 0,8 und 1,5 aufweisen.

10. Elektrische Maschine nach Anspruch 1, **dadurch gekennzeichnet, dass** die flügelartigen Rippenansätze (48) bezüglich ihres Querschnitts ein Längen-Breitenverhältnis (I : b) im Bereich zwischen 1,5 und 6,0 aufweisen.

**Claims**

1. Rotating electric machine (1), having a stator (4) disposed in a housing (2) and a rotor (10) rotatably supported by a shaft (6) about an axis of rotation (8), wherein the housing (2) has a circumferential wall (12) and two axially opposing end walls (14, 16) formed as bearing flanges having rotary bearings (18) for the shaft (6), and wherein two cooling fan impellers (20, 22) are connected to the shaft (6), specifically on the one hand an inner cooling fan impeller (20) inside the housing (2), which upon rotation generates an inner cooling air circuit (A) inside the housing (2), and on the other hand an outer cooling fan impeller (22) outside the housing (2), which upon rotation generates an outer cooling air flow (B) flowing over the housing (2), wherein the first end wall (14) disposed on the side of the outer cooling fan impeller (22) has an outer cooling rib geometry (28) on its outer side facing towards the outer cooling fan impeller (22) as well as an inner cooling rib geometry (30) on its opposing inner side, wherein the outer cooling fan impeller (22) is formed as a radial impeller with radial blades (32), wherein on the first end wall (14) a cap-like cover (33) is fitted - overlapping the cooling rib geometry (28) of the first end wall (14) and the cooling fan impeller (22) - which has a central air inlet opening (38) in a cap wall (34) perpendicular to the axis of rotation (8) and circumferentially surrounds the first end wall (14) with an axial circumferential edge (36) extending from the cap wall (34), wherein the outer cooling fan impeller (22) in conjunction with the cover (33) is formed such that upon rotation, air drawn in axially through the air inlet opening (38) of the cover (33) flows radially outwards through the outer cooling rib geometry (28) and is redirected in an axial direction in the radially outer region by the cover (33) and flows on the outside over the housing circumferential wall (12), **characterised in that** the first end wall (14) is formed with a high thermal conductivity of at least

$$100 \ \frac{W}{m \cdot K}$$ and the outer cooling rib geometry (28) of the first end wall (14) is formed, in a radially inner region of the first end wall (14), which region is covered by the outer cooling fan impeller (22) upon rotation, of pin-like cooling projections (44) projecting axially into the vicinity of the cooling fan impeller (22), and is formed, in a region of the first end wall (14) which is radially outwardly adjacent to the rotation region of the outer cooling fan impeller (22), of pin-like cooling projections (46) projecting axially up to the cover (33), and is formed, in a radially outer region of the first end wall (14), of wing-shaped axially and radially oriented rib projections which lie in the inner transition region between the cap wall (34) and the circumferential edge (36) of the cover (33).

2. Electric machine according to claim 1, **characterised in that** at least the first end wall (14) of the housing (2), preferably also at least the circumferential wall (12), is composed of a material having good thermal conductivity, in particular aluminium.

3. Electric machine according to claim 1 or 2, **characterised in that** the circumferential wall (12) of the housing (2) has a cooling rib geometry (40) on the outer side, which cooling rib geometry (40) is composed at least predominantly of elongated, radially projecting and axially extending cooling ribs (42).

4. Electric machine according to one of claims 1 to 3, **characterised in that** the first end wall (14) has air openings (52) for the outer cooling air flow (B) in an outer edge region (50) radially protruding over the adjacent circumferential wall (12).

5. Electric machine according to one of claims 1 to 4, **characterised in that** the inner cooling fan impeller (20) is formed as a radial or diagonal impeller such that the inner cooling air circuit (A) passes through axial cooling channels (54) of the rotor (10), over the inner cooling rib geometry (30) of the first end wall (14), through gaps of the rotor (4) formed between a stator core (24) and stator windings (26), and preferably over an additional cooling rib geometry (56) on the inner side of the second end wall (16).

6. Electric machine according to one of claims 1 to 5, **characterised in that** the inner cooling rib geometry (30) of the first end wall (14) is formed at least partially from pin-like, axially projecting cooling projections (58).

7. Electric machine according to one of claims 1 to 6, **characterised in that** the inner cooling fan impeller (20) is disposed on the side of the rotor (10) facing towards the first end wall (14).

8. Electric machine according to claim 1 or 6, **characterised in that** the cooling projections (44, 46, 48, 58) of the/each end wall (14, 16) are formed with a cross-section tapering towards their free end, so that the end wall (14, 16) can be manufactured as a moulded part, in particular as a die-cast metal part, with simple axial demoulding.

9. Electric machine according to claim 8, **characterised in that** the pin-like cooling projections (44, 46, 58) have a length-width ratio (l:b) with respect to their cross-section in the range between 0.8 and 1.5.

10. Electric machine according to claim 1, **characterised in that** the wing-shaped rib projections (48) have a length-width ratio (l:b) with respect to their cross-section in the range between 1.5 and 6.0.

**Revendications**

1. Machine électrique tournante (1), comprenant un stator (4) disposé dans un boîtier (2) et un rotor (10) monté de manière à pouvoir tourner autour d'un axe de rotation (8) par l'intermédiaire d'un arbre (6), dans lequel le boîtier (2) présente une paroi périphérique (12) et deux parois frontales (14, 16) se faisant face axialement, réalisées sous la forme de supports de montage comprenant des coussinets de pivotement (18) pour l'arbre (6), et dans lequel deux roues de ventilateur de refroidissement (20, 22) sont reliées à l'arbre (6), à savoir d'une part, à l'intérieur du boîtier (2), une roue de ventilateur de refroidissement (20) intérieure produisant lors de la rotation à l'intérieur du boîtier (2) un circuit intérieur d'air de refroidissement (A) et d'autre part, à l'extérieur du boîtier (2), une roue de ventilateur de refroidissement (22) extérieure produisant lors de la rotation un écoulement d'air de refroidissement extérieur (B) inondant le boîtier (2), dans lequel la première paroi frontale (14) disposée sur le côté de la roue de ventilateur de refroidissement extérieure (22) présente, sur son côté extérieur tourné vers la roue de ventilateur de refroidissement extérieure (22), une forme géométrique extérieure de nervure de refroidissement (28), ainsi que, sur son côté intérieur opposé, une forme géométrique intérieure de nervure de refroidissement (30), dans lequel la roue de ventilateur de refroidissement extérieure (22) est réalisée sous la forme d'une roue radiale comprenant des pales (32) radiales, dans lequel un capot (33) de type capuchon est posé sur la première paroi frontale (14) - de manière à recouvrir la forme géométrique de nervure de refroidissement (28) de cette dernière et la roue de ventilateur de refroidissement (22), lequel capot présente, dans une paroi de capuchon (34) perpendiculaire par rapport à l'axe de rotation (8), une ouverture d'entrée d'air (38) centrée et qui entoure de manière périphérique la première paroi frontale (14) d'un bord périphérique (36) axial partant de la paroi de capuchon (34), dans lequel la roue de ventilateur de refroidissement extérieure (22) est réalisée en liaison avec le capot (33) de telle manière que lors de la rotation, de l'air aspiré axialement par l'ouverture d'entrée d'air (38) du capot (33) lors de la rotation traverse la forme géométrique de nervure de refroidissement extérieure (28) de manière radiale vers l'extérieur et qu'il est dévié dans la zone radialement extérieure par l'intermédiaire du capot (33) dans une direction axiale et inonde côté extérieur la paroi périphérique de boîtier (12), **caractérisée en ce que** la première paroi frontale (14) est réalisée avec une conductivité thermique élevée d'au moins $100\ \frac{W}{m \cdot k}$, et la forme géométrique de nervure de refroidissement extérieure (28) de la première paroi frontale (14) est formée, dans une zone radialement intérieure recouverte par la roue de ventilateur de refroidissement extérieure (22) lors de la rotation, de la première paroi frontale (14), par des épaulements de refroidissement (44) de type tige dépassant axialement jusqu'à la proximité de la roue de ventilateur de refroidissement (22), et, dans une zone, se raccordant radialement vers l'extérieur à la zone de rotation de la roue de ventilateur de refroidissement (22) extérieure, de la première paroi frontale (14), par des épaulements de refroidissement (46) de type tige dépassant axialement en direction du capot (33), et, dans une zone radialement extérieure de la première paroi frontale (14), par des épaulements de nervure orientés de manière axiale et de manière radiale à la manière d'ailettes, lesquels se trouvent dans la zone de transition intérieure entre la paroi de capuchon (34) et le bord périphérique (36) du capot (33).

2. Machine électrique selon la revendication 1, **caractérisée en ce qu'**au moins la première paroi frontale (14) du boîtier (2), de préférence également au moins la paroi périphérique (12), est constituée d'un matériau à bonne thermoconduction, en particulier d'aluminium.

3. Machine électrique selon la revendication 1 ou 2, **caractérisée en ce que** la paroi périphérique (12) du boîtier (2) présente, côté extérieur une forme géométrique de nervure de refroidissement (40), qui est constituée de manière préférée au moins majoritairement de nervures de refroidissement (42) allongées, dépassant radialement et s'étendant axialement.

4. Machine électrique selon l'une quelconque des revendications 1 à 3, **caractérisée en ce que** la première paroi frontale (14) présente, dans une zone de bord (50) extérieure faisant saillie radialement de la paroi périphérique (12) adjacente, des ouvertures d'air (52) pour l'écoulement d'air de refroidissement extérieur (B).

5. Machine électrique selon l'une quelconque des revendications 1 à 4, **caractérisée en ce que** la roue de ventilateur de refroidissement intérieure (20) est réalisée sous la forme d'une roue radiale ou d'une roue diagonale de telle manière que le circuit d'air de refroidissement intérieur (A) s'étend à travers des canaux de refroidissement (54) axiaux du rotor (10), sur la forme géométrique de nervure de refroidissement intérieure (30) de la première paroi frontale (14), à travers en particulier des fentes, formées entre le noyau de stator (24) et des enroulements de stator (26), du stator (4), et de manière préférée sur une forme géométrique de nervure de refroidissement supplémentaire (56) sur le côté intérieur de la deuxième paroi frontale (16).

6. Machine électrique selon l'une quelconque des revendications 1 à 5, **caractérisée en ce que** la forme géométrique de nervure de refroidissement intérieure (30) de la première paroi frontale (14) est formée au moins en partie par des épaulements de refroidissement (58) de type tige, dépassant axialement.

7. Machine électrique selon l'une quelconque des revendications 1 à 6, **caractérisée en ce que** la roue de ventilateur de refroidissement intérieure (20) est disposée sur le côté, tourné vers la première paroi frontale (14), du rotor (10).

8. Machine électrique selon la revendication 1 ou 6, **caractérisée en ce que** les épaulements de refroidissement (44, 46, 48, 58) de la/de chaque paroi frontale (14, 16) sont réalisés avec une section transversale se rétrécissant en direction de leur extrémité libre de sorte qu'il est possible de produire la paroi frontale (14 ; 16) sous la forme d'une pièce moulée, en particulier sous la forme d'une pièce moulée sous pression en métal, avec une simple déformation axiale.

**9.** Machine électrique selon la revendication 8, **caractérisée en ce que** les épaulements de refroidissement (44, 46, 58) de type tige présentent, par rapport à leur section transversale, un rapport longueur-largeur (L/1) situé dans la plage comprise entre 0,8 et 1,5.

**10.** Machine électrique selon la revendication 1, **caractérisée en ce que** les épaulements de nervure (48) de type ailette présentent, par rapport à leur section transversale, un rapport longueur-largeur (L/1) situé dans la plage comprise entre 1,5 et 6,0.

FIG. 1

FIG.2

FIG.3

FIG. 4

FIG. 5

FIG.6

FIG.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1768234 A1
- EP 0387743 B1
- DE 69004834 T2
- EP 1100182 A1
- US 20040150270 A1
- GB 2283371 A